# EUROPEAN PATENT APPLICATION

(11) **EP 1 708 337 A1**
(43) Date of publication of application: **04.10.2006**
(21) Application number: 04807277.1
(22) Date of filing: 17.12.2004
(51) Int. Cl.: H02K 1/18, H02K 15/02, H02K 17/42

(54) **ASSEMBLING STRUCTURE OF POWER GENERATING SET**

(30) Priority: 19.12.2003 JP 2003423488
(71) Applicant: HYUN LABORATORY CO., LTD., Osaka-shi, Osaka 550-0012 (JP)
(72) Inventor: HYUN Chung, Hyun Laboratory Co., Ltd., Nishi-ku, Osaka-shi, Osaka 550-0012 (JP)
(74) Representative: Grünecker, Kinkeldey, Stockmair & Schwanhäusser Anwaltssozietät
(86) International application number: PCT/JP2004/018919
(87) International publication number: WO 2005/062442

(57) **Abstract**

A generator comprises a first core (hollow cylindrical core) 1, a second core (cylindrical columnar core) 2, a plurality of extending core portions (radially extending core portions) 3 interposed between the cores and radially extending at predetermined spacing in the circumferential direction, slots 4 formed between adjacent ones of the radially extending core portions, and primary and secondary windings 5 and 6 wound around the extending core portions 3 between the slots. The plurality of radially extending core portions 3 with the primary and secondary windings being wound therearound are extending from the hollow cylindrical core 1 and integrated with the hollow cylindrical core 1, and the cylindrical columnar core 2 is attached into the hollow area of the hollow cylindrical core 1. This assembling structure and method can improve the workability when assembling the generator including the primary and secondary windings.

## Description

### TECHNICAL FIELD

The present invention relates to an assembling structure and method for a generator (or induction generator) useful for supplying electric energy.

### BACKGROUND ART

There have been known generators such as hydroelectric generators, thermoelectric generators, nuclear generators, solar generators, wind power generators, ocean-thermal energy conversion generators, and chemical generators (batteries). However, it has been pointed out that hydroelectric generators may cause destruction of nature due to dam construction and/or deposited sediment, thermoelectric generators may cause air pollution due to exhaust gas, and nuclear generators may cause radioactive pollution. Also, solar generators, wind power generators, and ocean-thermal energy conversion generators depend on natural environments, and batteries require disposal of metallic constituents. Thus, these kinds of generators have been pointed out to have their respective specific problems.

Meanwhile, in respect to a self-power generator (induction generator), Japanese Application Laid-Open No. 303356/1995 (JP-7-303356A) (Patent Document 1) discloses a generator comprising: a primary winding for generating an alternating magnetic field and a traveling magnetic field; and a secondary winding arranged in an interlinked manner with the alternating current and the traveling magnetic field generated by the primary winding. This document describes a generator comprising: a cylindrical columnar core; slots axially formed at constant spacing in the circumferential direction on the outer circumferential side of the cylindrical columnar core; primary and secondary windings fitted into the slots; and an annular cylindrical core adapted to be magnetically coupled with the cylindrical columnar core and having a hollow area adapted to be fitted with the cylindrical columnar core. It is further described that the cylindrical columnar core is fitted to the hollow area of the annular cylindrical core, while fitting projections of the cylindrical columnar core along cut grooves of the annular cylindrical core, to assemble a core.

However, generators having such a structure require windings to be fitted into slots in a cylindrical columnar core, resulting in difficulty in improving the workability when assembling the generators.
Patent Document 1: JP-7-303356A (claims and paragraphs [0014] and [0015])

### DISCLOSURE OF THE INVENTION

### PROBLEMS TO BE SOLVED BY THE INVENTION

Accordingly, it is an object of the present invention to provide an assembling structure and method capable of improving the workability when assembling a generator (induction generator) comprising primary and secondary windings.

It is another object of the present invention to provide an assembling structure and method capable of significantly improving the productivity of a generator (induction generator).

### MEANS TO SOLVE THE PROBLEMS

The present inventor has been dedicated to examining and solving the above-described objects to consequently find that with a structure capable of attaching a cylindrical columnar core into the hollow area of a hollow cylindrical core via extending core portions arranged at constant spacing in the circumferential direction and extending radially, primary and secondary windings can be wound around the extending core portions between slots and the cylindrical columnar core can be attached smoothly into the hollow area of the hollow cylindrical core, and then completed the present invention.

That is, an assembling structure of a generator (or generating apparatus) according to the present invention comprises (a) first core and (b) second core attachable to each other, (c) a plurality of extending core portions interposed (or provided) between the first and second cores, and (d) primary and secondary windings wound around the extending core portions. This structure comprises the first and second cores, and the plurality of extending core portions which have the primary and/or secondary windings wound therearound and may be integrated (or united) at least partially with at least one of the first and second cores. Then, at least one member among (i) the first core, (ii) the second core and (iii) the plurality of extending core portions is attachable to the other adjacent member(s) in the form that the primary and/or secondary windings is/are wound around the extending core portion. In accordance with this structure, with the primary and/or secondary windings being wound around the plurality of extending core portions, at least one member among the first core, the second core and the extending core portions is attachable to adjacent member(s), whereby it is possible to significantly improve the efficiency in assembling the generator even if the primary and secondary windings are provided.

Incidentally, the primary winding wound around one extending core portion is adapted to generate an alternating magnetic field and a traveling magnetic field (rotating magnetic field) in one of the first and second cores [e.g., first core (hollow cylindrical core or first disk-shaped core, etc.)], and the secondary winding wound around the extending core portion is adapted to magnetically intersect (or interlink) with the alternating magnetic field and the traveling magnetic field (or rotating magnetic field) generated by the primary winding.

At least one of the first and second cores may be integrated with the plurality of extending core portions having the primary and secondary windings wound therearound, and the other core may be attachable to the one core.

The first and second cores may be attachable to each other in an axially fitted configuration (or form) to each other or in a concentric configuration (or form), or may be formed by at least a pair of disk-shaped cores to be concentrically attachable to each other in an axially laminated configuration (or form). Further, the extending core portions may be formed in an extending configuration (or form) radially from at least one of the first and second cores at predetermined spacing in the circumferential direction, or may be formed in an extending configuration (or form) perpendicularly to the radial direction (in parallel with the axial direction).

The above-described assembling structure may comprise (a) a hollow cylindrical core and (b) a cylindrical columnar core adapted to be attached into the hollow area of the hollow cylindrical core, (c) a plurality of radially extending core portions (having a symmetrical structure) interposed between the hollow cylindrical core and the cylindrical columnar core and extending radially at predetermined spacing in the circumferential direction, (e) slots formed between adjacent ones of the extending core portions, and (d) primary and secondary windings wound around the extending core portions between the slots. This structure comprises the hollow cylindrical core, the cylindrical columnar core, and the extending core portions which have the primary and/or secondary windings wound therearound between the slots and may be integrated at least partially with at least one of the hollow cylindrical core (1) and the cylindrical columnar core (2). Then, at least one member among the hollow cylindrical core (1), the cylindrical columnar core (2), and the plurality of extending core portions (3) is attachable to the other adjacent member(s) in the form that the primary and/or secondary windings is/are wound around the extending core portions between the slots. In accordance with this structure, with the primary and/or secondary windings being wound around the plurality of extending core portions, at least one member among the plurality of core portions is attachable to adjacent member(s), whereby it is possible to significantly improve the efficiency in assembling the generator even if the primary and secondary windings are provided.

The above-described assembling structure, which is only required that at least one member among the plurality of core portions is attachable to the other adjacent member(s), can be composed of a plurality of core portions that can be assembled or integrally attached (fitted). For example, at least one of the hollow cylindrical core and the cylindrical columnar core may be integrated with the plurality of extending core portions having the primary and secondary windings wound therearound, and the other core may be attachable to the one core. For example, in the above-described assembling structure, the plurality of radially extending core portions having the primary and secondary windings wound therearound may be extending from the outer circumferential surface of the cylindrical columnar core and integrated with the cylindrical columnar core. Also, the plurality of radially extending core portions having the primary and secondary windings wound therearound may be extending from the inner circumferential surface of the hollow cylindrical core and integrated with the hollow cylindrical core. Also, the plurality of radially extending core portions each may be composed of: a first extending section having the primary or secondary winding wound therearound and integrated with the hollow cylindrical core at the inner circumferential surface thereof; and a second extending section having the secondary or primary winding wound therearound and integrated with of the cylindrical columnar core at the outer circumferential surface thereof, and the second extending section is capable of facing (or abutting on) the first radially extending section. In accordance with this structure, the first and second extending sections can be attached or fitted to each other in a facing configuration by attaching or fitting the cylindrical columnar core into the hollow cylindrical core. Further, the structure may be composed of the hollow cylindrical core, cylindrical columnar core, and the plurality of extending core portions having the primary and secondary windings wound therearound so that the respective cores and core portions can be attached or fitted to each other.

The assembling structure according to the present invention may comprise (a) first disk-shaped core and (b) second disk-shaped core attachable to each other in an axially laminated configuration , (c) a plurality of columnar extending core portions interposed between the first and second disk-shaped cores and extending perpendicularly to (or in the laminating direction of) the disk-shaped cores at predetermined spacing in the circumferential direction, and (d) primary and secondary windings wound around the columnar core portions. The plurality of columnar extending core portions each may be composed of: a first columnar extending section having the primary winding wound therearound and integrated with the first disk-shaped core; and a second columnar extending section having the secondary winding wound therearound and integrated with the second disk-shaped core,andthe second columnar extending sections is capable of facing (or abutting on) the first columnar extending section, and the first and second disk-shaped cores may be attachable to each other in the form that the first and second columnar extending sections are faced each other.

The present invention also includes an assembling method for the generator. That is, the method according to the present invention is adapted to assemble a generator comprising (a) a first core and (b) a second core attachable to each other, (c) a plurality of extending core portions interposed between the first and second cores, and (d) primary and secondary windings wound around the extending core portions. In this method, the plurality of extending core portions, which have the primary and/or secondary windings wound therearound, may be integrated at least partially with at least one of the first and second cores, and the generator can be assembled by attaching at least one member among (i) the first core, (ii) the second core and (iii) the plurality of extending core portions to the other adjacent member(s) in the form that the primary and/or secondary windings is/are wound around the extending core portions.

For example, a generator may be assembled which comprises (a) a hollow cylindrical core and (b) a cylindrical columnar core adapted to be attached into the hollow area of the hollow cylindrical core, (c) a plurality of extending core portions (having a symmetrical structure) interposed between the hollow cylindrical core and the cylindrical columnar core and radially extending at predetermined spacing in the circumferential direction, (e) slots formed between adjacent ones of the extending core portions, and (d) primary and secondary windings wound around the extending core portions between the slots. In this method, the plurality of extending core portions, which have the primary and/or secondary windings wound therearound, may be integrated at least partially with at least one of the hollow cylindrical core (1) and the cylindrical columnar core (2), and the generator can be assembled by attaching at least one member among the hollow cylindrical core (1), the cylindrical columnar core (2), and the plurality of extending core portions (3) to the other adjacent member(s) in the form that the primary and/or secondary windings is/are wound around the extending core portions between the slots.

Further, a generator may be assembled which comprises (a) a first disk-shaped core and (b) a second disk-shaped core attachable to each other in an axially laminated configuration, (c) a plurality of columnar extending core portions interposed between the first and second disk-shaped cores and perpendicularly extending to (or in the laminating direction of) the disk-shaped cores at predetermined spacing in the circumferential direction, and (d) primary and secondary windings wound around the columnar extending core portions. That is, the generator may be assembled by attaching at least one member among the first and second disk-shaped cores and the plurality of columnar core portions to the other adjacent member(s) in the form that the primary and/or secondary windings is/are wound around the extending core portions.

Incidentally, the first core (hollow cylindrical core or first disk-shaped core, etc.) of the above-described generator is understandable as a stator in a common motor, and the above-described generator may usually include a rotor.

### EFFECT OF THE INVENTION

In accordance with the present invention, since at least one among a plurality of cores and core portions is attachable to the other adjacent core(s) and core portion(s), it is possible to significantly improve the workability when assembling an apparatus [generator (induction generator)] including primary and secondary windings. It is also possible to significantly improve the productivity of a generator (induction generator).

### BRIEF DESCRIPTION OF THE DRAWINGS

[Fig. 1] Fig. 1 is a schematic disassembled (or exploded) perspective view showing an embodiment of the present invention.
[Fig. 2] Fig. 2 is a schematic plan view of the apparatus shown in Fig. 1.
[Fig. 3] Fig. 3 is winding diagrams of the apparatus shown in Fig. 1, where Fig. 3 (a) is a winding diagram of a primary winding and Fig. 3 (b) is a winding diagram of a secondary winding.
[Fig. 4] Fig. 4 is a schematic cross-sectional view of the apparatus shown in Fig. 1.
[Fig. 5] Fig. 5 is a schematic configuration diagram showing another embodiment of the present invention.
[Fig. 6] Fig. 6 is a schematic configuration diagram showing still another embodiment of the present invention.
[Fig. 7] Fig. 7 is a schematic configuration diagram showing a further embodiment of the present invention.
[Fig. 8] Fig. 8 is schematic configuration diagrams showing a still further embodiment of the present invention, where Fig. 8 (a) is a schematic plan view, Fig. 8 (b) is a winding diagram of a primary winding, and Fig. 8 (c) is a winding diagram of a secondary winding.
[Fig. 9] Fig. 9 is a schematic plan view showing another embodiment of the slot shape.
[Fig. 10] Fig. 10 is a schematic cross-sectional view showing another embodiment of the present invention.
[Fig. 11] Fig. 11 is a schematic plan view showing the first core having the primary and secondary windings shown in Fig. 10.
[Fig. 12] Fig. 12 is a schematic perspective view showing the second core in the embodiment shown in Fig. 10.

### DETAILED DESCRIPTION OF THE INVENTION

Hereinafter, the present invention will be described in detail with reference to the accompanying drawings. Incidentally, the following descriptions omit from explanation insulating means (e.g., insulating paper, insulating layer, or insulating member) commonly used in such an apparatus.

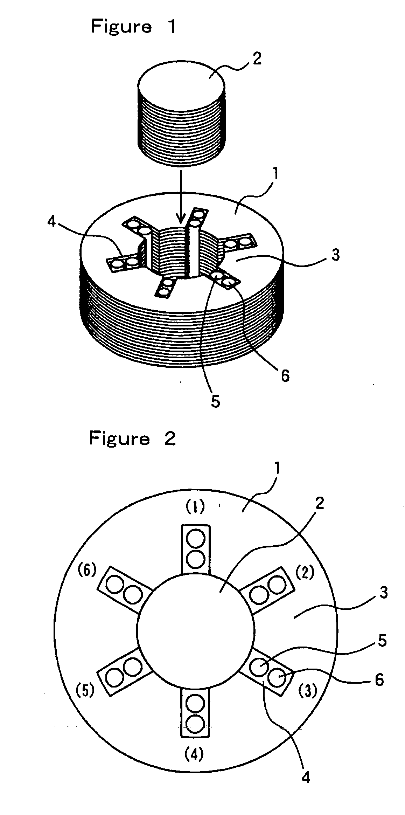

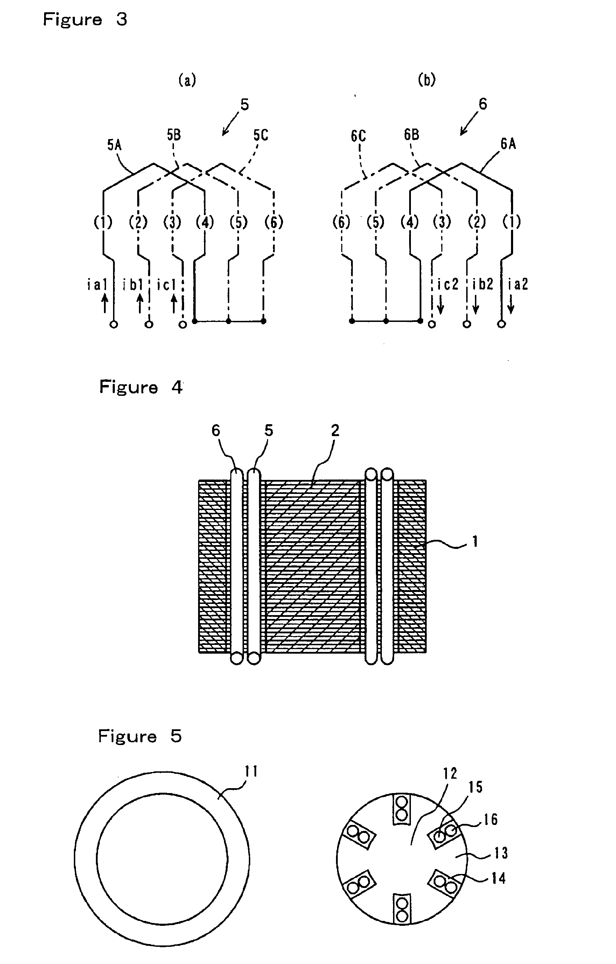

Fig. lisa schematic disassembled perspective view showing an embodiment of the present invention; Fig. 2 is a schematic plan view of the apparatus shown in Fig. 1; Fig. 3 shows winding diagrams of the apparatus shown in Fig.1, where Fig. 3 (a) is a winding diagram of a primary winding and Fig. 3 (b) is a winding diagram of a secondary winding; and Fig. 4 shows a schematic cross-sectional view of the apparatus shown in Fig. 1.

Figs. 1 to 4 show a three-phase alternating-current generator comprising a first core (hollow cylindrical core (or annular cylindrical core)) 1, a second core (cylindrical columnar core (or circular columnar core)) 2 that is attachable or fittable into the hollow area of the hollow cylindrical core, and a plurality of extending core portions (radially extending core portions) 3 extending radially (inwardly) at constant spacing in the circumferential direction on the inner circumferential surface of the hollow cylindrical core 1; the plurality of radially extending core portions being formed in a symmetrical structure. Also, the hollow cylindrical core (or annular cylindrical core) 1 and the plurality of radially extending core portions 3 are formed integrally with each other. That is, the hollow cylindrical core (or annular cylindrical core) 1 and the plurality of radially extending core portions 3 are formed by laminating a plurality of thin steel plates each composed of an annular strip (or band) and extending sections extending inwardly at predetermined spacing from the inner circumference of the annular strip. The cylindrical columnar core is also formed by laminating a plurality of thin circular steel plates.

Six slots 4 extending radially are formed, respectively, between the plurality of radially extending core portions 3 at constant spacing in the circumferential direction, and primary and secondary windings 5 and 6 are wound around the extending core portions 3 between the slots 4 in a bipolar full-pitch winding manner (or configuration). That is, as shown in Fig.3 (a), the three-phase primary winding 5, which is connected to a three-phase alternating-current power supply to pass three-phase alternating currents ia1, ib1, and ic1 therethrough, is composed of: a U1-phase winding 5A straddling three extending core portions 3 through the slot numbers (1) and (4); a V1-phase winding 5B straddling three extending core portions 3 through the slot numbers (2) and (5); and a W1-phase winding 5C straddling three extending core portions 3 through the slot numbers (3) and (6), in which the U1-, V1-, and W1-phase windings 5A to 5C are connected to each other through the slot numbers (4) to (6) to have a Y-connection three-phase symmetrically wound structure. Meanwhile, as shown in Fig.3 (b), the secondary winding 6, which is adapted to pass three-phase alternating currents ia2, ib2, and ic2 therethrough, is composed of: a U2-phase winding 6A straddling three extending core portions 3 through the slot numbers (1) and (4); a V2-phase winding 6B straddling three extending core portions 3 through the slot numbers (2) and (5); and a W2-phase winding 6C straddling three extending core portions 3 through the slot numbers (3) and (6), in which the U2-, V2-, and W2-phase windings 6A to 6C are connected to each other through the slot numbers (4) to (6) to have a Y-connection three-phase symmetrically wound structure.

In such a structure as described above, the primary winding 5 can generate an alternating magnetic field and a traveling magnetic field (rotating magnetic field) in the cylindrical columnar core 2, and the secondary winding 6 can intersect with the alternating magnetic field and the traveling magnetic field (rotating magnetic field) generated by the primary winding 5. In particular, the cylindrical columnar core 2 is attachable or fittable into the hollow area of the hollow cylindrical core 1 with the primary and secondary windings 5 and 6 being wound around the extending core portions 3 of the hollow cylindrical core 1. It is therefore possible to improve the efficiency in assembling the generator and thereby possible to increase the productivity.

It is only required that at least one among the plurality of cores and core portions (the hollow cylindrical core (1), the cylindrical columnar core (2), and the plurality of radially extending core portions (3) with the primary and/or secondary windings wound therearound) is attachable or fittable into the other adjacent core(s) and core portion(s) with the windings being wound. For example, at least one of the hollow cylindrical core and the cylindrical columnar core may be integrated (or united) with the plurality of extending core portions with the primary and secondary windings wound therearound, and the other core may be attachable to the one core.

Fig. 5 is a schematic configuration diagram showing another embodiment of the present invention. In this embodiment, a plurality of radially extending core portions 13 radially extend from the outer circumferential surface of a cylindrical columnar core (or circular columnar core) 12, contrary to the generator shown in Fig. 1. In more detail, the apparatus (motor or generator) shown in Fig. 5 comprises a hollow cylindrical core (or annular cylindrical core) 11, a cylindrical columnar core (or circular columnar core) 12, and a plurality of extending core portions 13 interposed (or provided) between the hollow cylindrical core 11 and the cylindrical columnar core 12 and radially extending from the outer circumferential surface of the cylindrical columnar core portion 12 at predetermined spacing. Similarly to the above-described case, six slots 14 for respectively winding or attaching primary and secondary windings 15 and 16 are formed between the plurality of extending core portions 13. Even in this structure, the cylindrical columnar core 12 is attachable or fittable into the hollow area of the hollow cylindrical core 11 with the primary and secondary windings 15 and 16 being wound around the plurality of extending core portions 13 using the plurality of (six) slots 14.

As described above, the plurality of radially extending core portions with the primary and/or secondary windings being wound therearound may entirely be integrated (or united) with at least one of the hollow cylindrical core (1) and the cylindrical columnar core (2), or the plurality of radially extending core portions may partially be integrated (or united) with at least one of the hollow cylindrical core (1) and the cylindrical columnar core (2). For example, the plurality of radially extending core portions with the primary and secondary windings being wound therearound may be extending from the outer circumferential surface of the cylindrical columnar core and integrated with the cylindrical columnar core, or may be extending from the inner circumferential surface of the hollow cylindrical core and integrated with the hollow cylindrical core.

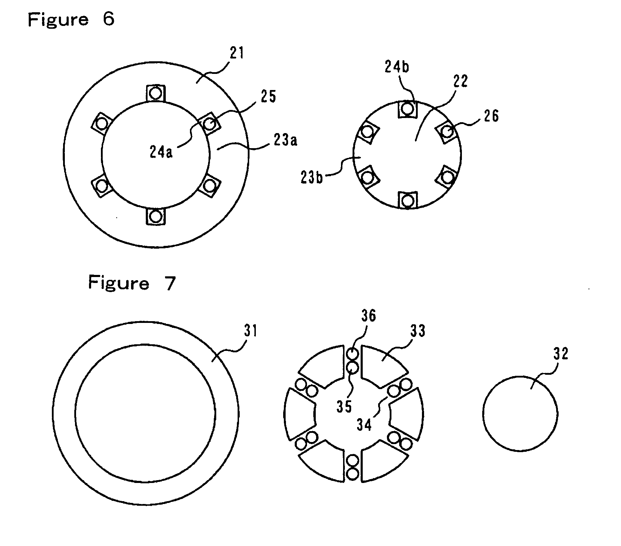

Fig. 6 is a schematic configuration diagram showing still another embodiment of the present invention. In this embodiment, primary and secondary windings 25 and 26 are wound or attached, respectively, around a hollow cylindrical core 21 and a cylindrical columnar core 22. That is, first extending core sections 23a extend radially and inwardly from the inner circumferential surface of the hollow cylindrical core (or annular cylindrical core) 21 at constant spacing in the circumferential direction, while second extending core sections 23b extend radially and outwardly from the outer circumferential surface of the cylindrical columnar core (or circular columnar core) 22 at constant spacing in the circumferential direction. The primary or secondary winding 25 or 26 is wound or attached around the first extending core sections 23a, and the secondary or primary winding 26 or 25 is wound or attached around the second extending core sections 23b. Then, the first and second extending core sections 23a and 23b can face each other to form extending core portions 23 extending radially between the hollow cylindrical core 21 and the cylindrical columnar core 22. Even in this structure, the hollow cylindrical core (or annular cylindrical core) 21 and the cylindrical columnar core (or circular columnar core) 22 can be attached or fitted to each other, with the primary or secondary winding 25 or 26 being wound around the first extending core sections 23a and the secondary or primary winding 26 or 25 being wound around the second extending core sections 23b, to form the extending core portions.

Fig. 7 is a schematic configuration diagram showing another embodiment of the present invention. In this embodiment, there are provided a hollow cylindrical core (annular cylindrical core) 31, a cylindrical columnar core (circular columnar core) 32, and a plurality of radially extending core portions 33 interposed (or provided) between the hollow cylindrical core 31 and the cylindrical columnar core 32. Then, windings constituting primary and secondary windings 35 and 36 are wound around the plurality of radially extending core portions 33 to maintain the shape of the plurality of radially extending core portions 33.
Incidentally, the plurality of radially extending core portions may be held by a holding member to wind or attach the primary and secondary windings therearound, and may be attached or fitted between the hollow cylindrical core and the cylindrical columnar core while being held by the holding member to assemble the apparatus.

Incidentally, the number of slots respectively formed between the plurality of radially extending core portions is not particularly limited to a specific one, and may be 6, 12, or 3 6, etc. Also, the winding configuration of the windings (or coil loops) may be single-phase winding, wave winding, chain winding, or double (or lap) winding (or two-phase winding).

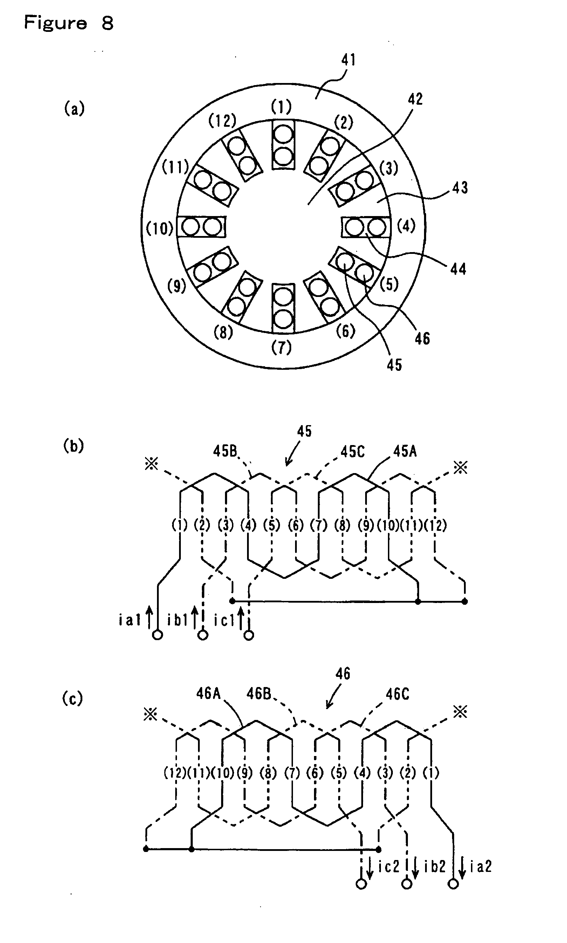

Fig. 8 shows schematic configuration diagrams showing still another embodiment of the present invention, where Fig. 8 (a) is a schematic plan view, Fig. 8 (b) is a winding diagram of a primary winding, and Fig. 8 (c) is a winding diagram of a secondary winding.

In this embodiment, a plurality of extending core portions 43 radially extend from the outer circumferential surface of a cylindrical columnar core 42, and a virtual line portion connecting the leading ends of the extending core 43 fits into the inner wall in the hollow area of a hollow cylindrical core (annular cylindrical core) 41, so that the plurality of extending core portions 43 can be fitted or attached into the hollow area of the hollow cylindrical core 41 together with the cylindrical columnar core 42. In this embodiment, 12 slots 44 are respectively formed between the plurality of extending core portions 43, and primary and secondary windings 45 and 46 are wound or attached in a double (or lap) winding configuration. That is, as shown in Fig. 8 (b), the primary winding 45, which is adapted to supply currents (exciting currents) ia1, ib1, and ic1 from a three-phase alternating-current power supply, is composed of: a U1-phase winding 45A straddling three extending core portions 43 through the slot numbers (1), (4), (7), and (10); a V1-phase winding 45B straddling three extending core portions 43 through the slot numbers (3), (6), (9), and (12); and a W1-phase winding 45C straddling three extending core portions 43 through the slot numbers (2), (5), (8), and (11), in which the U1-, V1-, and W1-phase windings 45A to 45C are connected to each other through the respective slot numbers (10), (12), and (2). As shown in Fig. 8 (c), the secondary winding 46 is also composed of a U1-phase winding 46A, V1-phase winding 46B, and W1-phase winding 46C wound or attached around slots of predetermined numbers in the same manner as the primary winding. In accordance with this structure, it is possible to establish a generator having a structure capable of generating a four-pole rotating magnetic field.

Incidentally, the shape of the slots around to which the windings are attached is not restricted to the above-described embodiments, and dropout prevention means (e.g., projection) for preventing dropout of the windings may be formed, for example, in the radially extending core portions on the opening sides of the slots, and the opening portions of the slots may be closed using blocking or closing means.

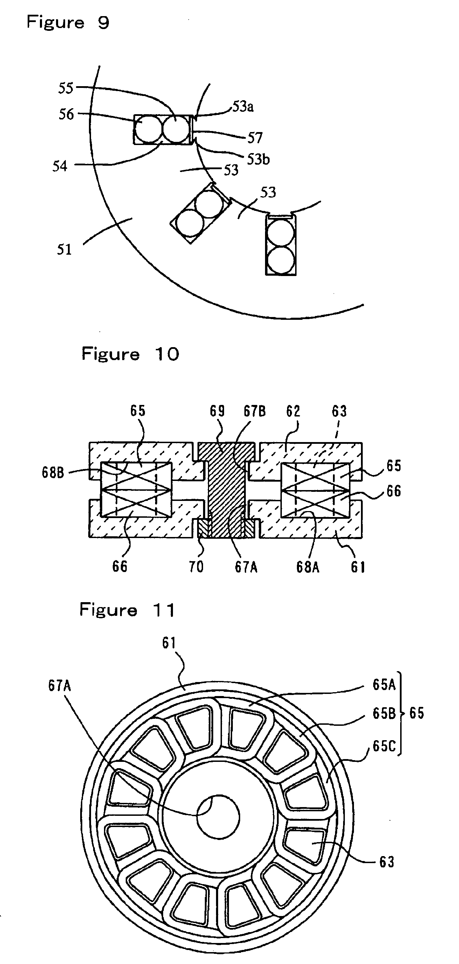

Fig. 9 is a schematic plan view showing another embodiment of the slot shape. In the embodiment shown in Fig. 9, a plurality of radially extending core portions 53 extend inwardly from the inner circumferential surface of a hollow cylindrical core 51 at predetermined spacing in the circumferential direction, and slots 54 are respectively formed between the radially extending core portions 53. Primary and secondary windings 55 and 56 are wound around the slots 54, and convex portions 53a and 53b for narrowing the width of the slot entrances are formed in the radially extending core portions 53 at the opening ends of the slots 54 to prevent dropout of the primary and secondary windings 55 and 56. Further, inside the slots 54 with respect to the convex portions 53a and 53b (on the deeper side of the slots adjacent to the convex portions 53a and 53b in this embodiment), resin plates 57 are fitted or inserted (or received) into the depth direction of the slots 54 to restrict the movement and/or dropout of the primary and secondary windings 55 and 56 from the slots 54.

Incidentally, the slots are not necessarily formed in the radially extending core portions extending from the hollow cylindrical core, and may be formed in radially extending core portions extending from the cylindrical columnar core. For example, in the embodiment shown in Fig. 6, slots may be formed in both the radially extending core portions extending from the hollow cylindrical core and the radially extending core portions extending from the cylindrical columnar core. Also, the dropout prevention means may be a convex portion or projection for narrowing the opening width of the slots, or may be composed of: groove portions (or guide portions) formed in a facing configuration in a pair of radially extending core portions that form a slot; and a restriction plate that can be fitted or inserted (or received) into the groove portions. Further, the restriction plate is not restricted to a resin plate such as a resin sheet, and may be an electrically insulating material (e.g. ceramic plate).

Incidentally, the first and second cores may be attachable to each other, and may be attachable to each other in an axially fitted form concentrically to each other or in a concentric form as is the case with the hollow cylindrical core and the cylindrical columnar core, or may be formed by at least a pair of disk-shaped cores to be attachable concentrically to each other in an axially laminated form. Further, depending on the form in which the first and second cores are attached to each other, the extending core portions may be formed in an extending form radially from at least one of the first and second cores at predetermined spacing in the circumferential direction, or may be formed in an extending form perpendicularly to the radial direction (in parallel with the axial direction) from at least one of the cores (especially from the inner area of the cores) at predetermined spacing in the circumferential direction.

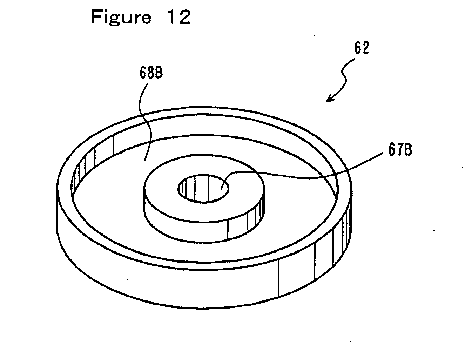

Fig. 10 is a schematic cross-sectional view showing another embodiment of the present invention; Fig.11 is a schematic plan view showing the first core having the primary and secondary windings shown in Fig.10; and Fig.12 is a schematic perspective view showing the second core shown in Fig.10.

The assembling structure for a generator shown in Fig. 10 comprises a first disk-shaped core 61 and a second disk-shaped core 62, the first and second disk-shaped cores 61 and 62 are attachable to each other in a laminated configuration with primary and secondary windings being housed (or accommodated) therebetween. That is, the first disk-shaped core 61 comprises an annular groove (annular recessed portion) 68A formed in one surface thereof, a plurality of extending core portions (columnar extending core portions) 63 extending perpendicularly to the radial direction (vertically in parallel with the axial direction) from the bottom surface of the annular groove at predetermined spacing in the circumferential direction, and primary and secondary windings 65 and 66 wound around the columnar extending core portions 63. The plurality of columnar extending core portions 63 are formed in a symmetrical structure and integrated with one surface of the first disk-shaped core 61 in the form that the secondary and primary windings 66 and 65 are wound around the columnar extending core portions. Incidentally, spaces between adjacent ones of the columnar extending core portions 63 correspond to the slots shown in Fig. 1. Then, three secondary windings 66 are wound around the columnar extending core portions 63 in a full-pitch double winding configuration, and further three primary windings 65A, 65B, and 65C are wound around the secondary windings in a full-pitch double winding configuration. On the other hand, in the second disk- shaped core 62, there is formed an annular groove (annular recessed portion) 68B for housing (or accommodating) the primary and secondary windings 65 and 66 therein. Incidentally, in this embodiment, ferrite ceramics are employed as the first and second disk-shaped cores. As shown in Figs. 11 and 12, through holes 67A and 67B are respectively formed in the axial center portions of the first and second disk-shaped cores 61 and 62.

A bolt 69 having a head portion with a diameter greater than the inner diameter of the through holes 67A and 67B is inserted into the through holes 67A and 67B and a nut 70 is threadably mounted (or screwed) on a spiral groove formed in the other end portion of the bolt to fasten or join and thereby attach the first and second disk-shaped cores 61 and 62 to each other in a laminated configuration via the primary and secondary windings 65 and 66. That is, the first and second disk-shaped cores 61 and 62 are attached to each other by inserting the bolt 69 into the through holes 67A and 67B from one side to the other and fastening using the nut 70.

Even in the above structure, the primary winding 65 can generate an alternating magnetic field and a traveling magnetic field (rotating magnetic field) in the second disk-shaped core 62, and the secondary winding 66 can intersect with the alternating magnetic field and the traveling magnetic field generated by the primary winding 65, as is the case with the embodiments shown in Fig. 1, etc. In particular, the columnar extending core portions 63, which extend from the one surface of the first disk-shaped core portion with the primary and secondary windings 65 and 66 being wound therearound, can be attached or fitted into the annular groove 68B in the second disk-shaped core portion 62. It is therefore possible to improve the efficiency in assembling the generator and thereby possible to increase the productivity. ,

Also, since the spaces between adjacent ones of the columnar extending core portions correspond to the slots shown in Fig. 1, the primary and secondary windings can be wound around the columnar extending core portions according as the embodiments shown in Figs. 1 to 8, and the number of slots can be increased or decreased by increasing or decreasing the number of columnar extending core portions.

Incidentally, the first and second cores can be fitted to each other in a laminated configuration without using the above-described fastening or joining means. For example, in order to fit the first and second cores to each other, recessed and convex fitting portions may be formed in the circumferential portions of the first and second cores, or an attachment recessed portion to which the leading end portions of the extending core portions can be fitted may be formed in one of the first and second cores. Also, the fastening or joining means is not restricted to a set of bolt and nut, and may be various means such as buckle-type (or buckle-style) fastening means.

Without being restricted to the embodiments shown in Figs. 10 to 12, the plurality of columnar extending core portions with the primary and/or secondary windings wound therearound and the first and/or second disk-shaped cores are not necessarily integrated by a joint or extension, etc., as long as at least one member among the first and second disk-shaped cores and the plurality of columnar extending core portions with the primary and/or secondary windings wound therearound can be attached to the other adjacent member(s). Also, the plurality of columnar extending core portions with the primary and/or secondary windings wound therearound may be integrated at least partially with at least one of the first and second disk-shaped core portions in an extending configuration. For example, all of the plurality of columnar extending core portions with the primary and secondary windings wound therearound may extend from the first or second disk-shaped core, or part of the columnar extending core portions may extend from the first disk-shaped core with windings being wound therearound, while the rest of the columnar extending core portions may extend from the second disk-shaped core with windings being wound therearound, and then the first and second disk-shaped cores thus integrated with the columnar extending core portions may be attached or fitted to each other. Also, the plurality of columnar extending core portions may comprise a first extending section integrated with the first disk-shaped core with the primary winding being wound therearound, and a second extending section integrated with the second disk-shaped core with the secondary winding being wound therearound. Such first and second disk-shaped cores may be attached to each other with the extending sections facing inward so that the first and second extending sections are brought into contact with each other in a facing configuration. Incidentally, in this embodiment, both of the extending sections may be at least contactable with each other, and may be fitted to each other by forming a fitting recessed portion and a fitting convex portion that can be fitted to each other in the respective sections. Further, an annular groove (recessed portion) for housing windings therein may be formed in at least one of the first and second disk-shaped cores, for example, one disk-shaped core may be formed with no recessed portion, while the other disk-shaped core may be formed with a recessed portion capable of housing windings therein.

Incidentally, in the present invention, the first and second cores and the extending core portions are not restricted to the above-described laminated bodies of steel plates or ferrite, and may be formed of magnetic material, and there is no distinction according to the type of material or the configuration of the cores and core portions. As a material of each core and core portion, there may be mentioned, for example, ferromagnetic material. Also, each core and core portion may be formed of either hard magnetic material or soft magnetic material, or may be formed by combining the both materials as required.

In addition, the first and/or second cores (e.g., hollow cylindrical core and/or cylindrical columnar core, and first and/or second disk-shaped cores) may have a plurality of magnetic poles such as two, four, or six poles.

Further, there may be some combinations of the number of poles, the number of slots (or coil loops forming (or constituting) windings), and the configuration of the windings. For example, a four-pole or six-pole rotating magnetic field may be generated by single-phase winding or two-phase winding with 24 or 36 slots. Incidentally, the coil loops forming (or constituting) windings may be attached to predetermined slots. Moreover, the primary winding may be formed nearer the hollow cylindrical core side (on the outer side), while the secondary winding may be formed nearer the cylindrical columnar core side (on the inner side), or the primary winding may be formed nearer the cylindrical columnar core side (on the inner side), while the secondary winding may be formed nearer the hollow cylindrical core side (on the outer side).

Also, in the present invention, there is no distinction according to the type (or style) of winding (including connection configuration such as wire connection, winding configuration, and combinations thereof, etc).
The connection configuration of the windings is not specifically restricted to, for example, Y-connection, but may be Δ-connection or V-connection. The combination of connection configurations for the respective primary and secondary windings is not also restricted to a specific one, ands may be of different connection configurations, for example, Y-connection for the primary winding while Δ-connection for the secondary winding, and vice versa. In addition, both the primary and secondary windings may have the same connection configuration such as Y-connection or Δ-connection. Further, the winding configuration is not restricted to full-pitch, and may be short-pitch.
Furthermore, the windings (or coil loops) may be of distributed winding, but are often of concentrated winding.

The primary winding generates an alternating magnetic field and a traveling magnetic field (rotating magnetic field) in the cylindrical columnar core by an exciting current, and usually, the secondary winding magnetically intersects or interlinks with the alternating magnetic field and the traveling magnetic field (rotating magnetic field) generated by the primary winding. This kind of magnetic coupling configuration can be formed by winding or attaching the primary and secondary windings around a plurality of slots in the same winding manner (same configuration or mode). That is, the primary and secondary windings are generally wound around slots at the same coil pitch and pole pitch (i.e., coil pitch and pole pitch according to the phase of the exciting current).

Single-phase or two-phase alternating current may be used as an exciting current, and usually, multi-phase alternating current (e.g., four-phase alternating current) and particularly three-phase alternating current is often employed. Incidentally, the above-described cores or core portions may be formed of magnetic material, and may be prepared by cutting off from a magnetic block or by sintering magnetic material such as ferrite, without being restricted to laminates of steel plates.

In adjacent cores or core portions, there may be formed, for example, a fitting groove (e.g., key groove extending in the axial direction) and a projection to increase the attaching and/or fitting performance and the positioning accuracy between the adjacent members.

### INDUSTRIAL APPLICABILITY

The present invention is useful for assembling various kinds of generators including primary and secondary windings, and in particular, in manufacturing the small-sized generators.

## Claims

1. An assembling structure of a generator comprising (a) a first core and (b) a second core attachable to each other, (c) a plurality of extending core portions interposed between the first and second cores, and (d) primary and secondary windings wound around the extending core portions,
which the assembling structure comprises the first and second cores, and the plurality of extending core portions which have the primary and/or secondary windings wound therearound and may be integrated at least partially with at least one of the first and second cores,
wherein at least one member among (i) the first core, (ii) the second core and (iii) the plurality of extending core portions is attachable to the other adjacent member(s) in the form that the primary and/or secondary windings is/are wound around the extending core portion.

2. The assembling structure according to claim 1,
wherein the generator comprises (a) a hollow cylindrical core and (b) a cylindrical columnar core adapted to be attached into the hollow area of the hollow cylindrical core, (c) a plurality of extending core portions interposed between the hollow cylindrical core and the cylindrical columnar core and radially extending at predetermined spacing in the circumferential direction, (e) slots formed between adjacent ones of the extending core portions, and (d) primary and secondary windings wound around the extending core portions between the slots,
which the assembling structure comprises the hollow cylindrical core, the cylindrical columnar core, and the extending core portions which have the primary and/or secondary windings wound therearound between the slots and may be integrated at least partially with at least one of the hollow cylindrical core (1) and the cylindrical columnar core (2),
wherein at least one member among the hollow cylindrical core (1), the cylindrical columnar core (2), and the plurality of extending core portions (3) is attachable to the other adjacent member(s) in the form that the primary and/or secondary windings is/are wound around the extending core portions between the slots.

3. The assembling structure according to claim 1,
wherein the primary winding is wound to generate an alternating magnetic field and a rotating magnetic field in one of the first and second cores, and the secondary winding is wound to intersect with the alternating magnetic field and the rotating magnetic field generated by the primary winding.

4. The assembling structure according to claim 1,
wherein at least one of the first and second cores is integrated with the plurality of extending core portions having the primary and secondary windings wound therearound, and the other core is attachable to the one core.

5. The assembling structure according to claim 2,
wherein at least one of the hollow cylindrical core and the cylindrical columnar core is integrated with the plurality of extending core portions having the primary and secondary windings wound therearound, and the other core is attachable to the one core.

6. The assembling structure according to claim 5,
wherein the plurality of extending core portions having the primary and secondary windings wound therearound are extending from the outer circumferential surface of the cylindrical columnar core and integrated with the cylindrical columnar core.

7. The assembling structure according to claim 5,
wherein the plurality of extending core portions having the primary and secondary windings wound therearound are extending from the inner circumferential surface of the hollow cylindrical core and integrated with the hollow cylindrical core.

8. The assembling structure according to claim 2,
wherein the plurality of extending core portions are each composed of: a first extending section having the primary or secondary winding wound therearound and integrated with the hollow cylindrical core at the inner circumferential surface thereof; and a second extending section having the secondary or primary winding wound therearound and integrated with the cylindrical columnar core at the outer circumferential surface thereof, and the second extending section is capable of facing the first extending section.

9. The assembling structure according to claim 1,
which comprises (a) first disk-shaped core and (b) second disk-shaped core attachable to each other in an axially laminated configuration (c) a plurality of columnar extending core portions interposed between the first and second disk-shaped cores and extending perpendicularly to the disk-shaped cores at predetermined spacing in the circumferential direction, and (d) primary and secondary windings wound around the columnar core portions.

10. The assembling structure according to claim 9, wherein the plurality of columnar extending core portions are each composed of: a first columnar extending section having the primary winding wound therearound and integrated with the first disk-shaped core; and a second columnar extending section having the secondary winding wound therearound and integrated with the second disk-shaped core, and the second columnar extending section is capable of facing the first columnar extending section, and wherein the first and second disk-shaped cores are attachable to each other in the form that the first and second columnar extending sections are faced each other.

11. A method of assembling a generator comprising (a) a first core and (b) a second core attachable to each other, (c) a plurality of extending core portions interposed between the first and second cores, and (d) primary and secondary windings wound around the extending core portions,
which the method comprises attaching at least one member among (i) the first core, (ii) the second core and (iii) the plurality of extending core portions to the other adjacent member(s) in the form that the primary and/or secondary windings is/are wound around the extending core portions,
wherein the plurality of extending core portions, which have the primary and/or secondary windings wound therearound, may be integrated at least partially with at least one of the first and second cores.

12. The assembling method according to claim 11,
wherein the generator comprises (a) a hollow cylindrical core and (b) a cylindrical columnar core adapted to be attached into the hollow area of the hollow cylindrical core, (c) a plurality of extending core portions interposed between the hollow cylindrical core and the cylindrical columnar core and radially extending at predetermined spacing in the circumferential direction, (e) slots formed between adjacent ones of the extending core portions, and (d) primary and secondary windings wound around the extending core portions between the slots,
which the method comprises attaching at least one member among the hollow cylindrical core (1), the cylindrical columnar core (2), and the plurality of extending core portions (3) to the other adjacent member(s) in the form that the primary and/or secondary windings is/are wound around the extending core portions between the slots,
wherein the plurality of extending core portions, which have the primary and/or secondary windings wound therearound, may be integrated at least partially with at least one of the hollow cylindrical core (1) and the cylindrical columnar core (2).

13. The assembling method according to claim 11,
wherein the assembling structure comprises (a) a first disk-shaped core and (b) second disk-shaped core attachable to each other in an axially laminated configuration, (c) a plurality of columnar extending core portions interposed between the first and second disk-shaped cores and perpendicularly extending to the disk-shaped cores at predetermined spacing in the circumferential direction, and (d) primary and secondary windings wound around the columnar extending core portions,
which the method comprises attaching at least one member among the first and second disk-shaped cores and the plurality of columnar extending core portions to the other adjacent member(s) in the form that the primary and/or secondary windings is/are wound around the extending core portions.
